Europäisches Patentamt

European Patent Office

Office européen des brevets

(19)

(11) Veröffentlichungsnummer: **0 106 401**
**B1**

(12) # EUROPÄISCHE PATENTSCHRIFT

(45) Veröffentlichungstag der Patentschrift:
16.09.87

(21) Anmeldenummer: 83201425.2

(22) Anmeldetag: 05.10.83

(51) Int. Cl.⁴: **C 04 B 35/46, H 01 B 3/12,
H 01 G 4/12**

(54) **Keramisches Dielektrikum auf Basis von Wismut enthaltendem BaTiO3.**

(30) Priorität: 09.10.82 DE 3237571

(43) Veröffentlichungstag der Anmeldung:
25.04.84 Patentblatt 84/17

(45) Bekanntmachung des Hinweises auf die Patenterteilung:
16.09.87 Patentblatt 87/38

(84) Benannte Vertragsstaaten:
BE DE FR GB NL

(56) Entgegenhaltungen:
DE - B - 1 104 882
FR - A - 2 139 031
GB - A - 1 327 903

JAPANESE JOURNAL OF APPLIED PHYSICS, Band 20, Nr. 4, 1981, Seiten 139-142, Tokyo, JP; N. YAMAOKA et al.: "Low temperature sintered BaTiO3 ceramics with Bi4Ti3O12 added"
JOURNAL OF THE PHYSICS AND CHEMISTRY OF SOLIDS, Band 23, 1962, Seiten 665-676, Pergamon Press, London, GB; E.C. SUBBARAO: "A family of ferroelectric bismuth compounds"

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **BE FR GB NL**

(72) Erfinder: **Hennings, Detlev, Dr., Hangstrasse 28,
D-5100 Aachen (DE)**
Erfinder: **Schreinemacher, Herbert, Sittarder Strasse 53,
D-5100 Aachen (DE)**

(74) Vertreter: **Nehmzow-David, Fritzl-Maria et al, Philips
Patentverwaltung GmbH
Wendenstrasse 35 Postfach 10 51 49,
D-2000 Hamburg 1 (DE)**

## Beschreibung

Die Erfindung bezieht sich auf ein keramisches Dielektrikum auf Basis von Wismut enthaltendem $BaTiO_3$.

Die Erfindung bezieht sich weiterhin auf die Verwendung des keramischen Dielektrikums für Vielschichtkondensatoren.

Im Rahmen der Miniaturisierung elektronischer Schaltungen gewinnt die Forderung nach Kondensatoren mit kleinen Flächenabmessungen und grossen Kapazitäten zunehmend an Bedeutung. Es bieten sich prinzipiell folgende Möglichkeiten, Kapazitätswerte zu erhöhen:
1. Vergrösserung der Fläche des Dielektrikums,
2. eine Erhöhung der relativen Dielektrizitätskonstanten $\varepsilon_{rel}$,
3. Verringerung der Dicke des Dielektrikums.

Um die Fläche eines Dielektrikums zu vergrössern, sind nur begrenzte Möglichkeiten vorhanden, da die maximal möglichen Flächen durch eine Reihe von Nebenbedingungen, wie z.B. Produktionsmaschinen und Grössenbegrenzungen im Hinblick auf die spätere Verwendung der Kondensatoren festgelegt sind. Es ist bekannt, eine Vergrösserung der Fläche des Dielektrikums ohne wesentliche Vergrösserung der Abmessungen des fertigen Bauelementes über sogenannte Vielschicht- oder Multilayer-Kondensatoren zu erreichen, bei welchen dünne keramische Folien mit metallischen Elektroden zu einem Schichtpaket gestapelt und anschliessend zu einem fertigen Bauelement gesintert werden. Mit dem Vielschichtaufbau ist eine Miniaturisierung von Kondensatoren bei gleichzeitig höheren Kapazitätswerten für die Praxis relativ einfach zu realisieren. Eine weitere Erhöhung der Kapazitätswerte von Kondensatoren bei kleinsten Abmessungen ist möglich, wenn Dielektrika mit verhältnismässig hohen relativen Dielektrizitätskonstanten eingesetzt werden.

Es ist allgemein bekannt, eine Erhöhung der relativen Dielektrizitätskonstanten $\varepsilon_{rel}$ durch die Verwendung von ferroelektrischen Werkstoffen, wie z.B. Mischkristallen des $BaTiO_3$ zu erreichen, wobei Werte für $\varepsilon_{rel} = 2000$ bis $\varepsilon_{rel} = 10\ 000$ bekannt sind. Mit einer steigenden Dielektrizitätskonstanten $\varepsilon_{rel}$ werden diese Materialien jedoch immer instabiler, so dass sich dadurch die Abhängigkeit von Temperatur und Feldstärke zunehmend verschlechtert. Da das Auftreten dieser Instabilitäten direkt mit der $\varepsilon$-Erhöhung gekoppelt ist, sind die physikalisch möglichen Grenzen dieser Materialien bereits erreicht.

Wenn mit $BaTiO_3$ auch ein Dielektrikum mit einer verhältnismässig hohen relativen Dielektrizitätskonstanten $\varepsilon_{rel}$ zur Verfügung steht, so ergibt sich gerade beim Bau von Vielschichtkondensatoren eine besondere Schwierigkeit: die Temperaturen, die zum Dichtsintern von $BaTiO_3$ erforderlich sind, liegen so hoch, dass die Elektroden der Vielschichtkondensatoren, die vor dem Sintern des keramischen Dielektrikums angebracht werden müssen, aus hochschmelzenden Edelmetallen, wie z.B. Palladium, bestehen müssen.

Es sind Versuche unternommen worden, Dielektrika für Vielschichtkondensatoren auf $BaTiO_3$-Basis herzustellen, wobei die Sintertemperatur durch Zusatz von $PbBi_4Ti_4O_{15}$ in Mengen von 2,5 bis 4,5 Mol% und zusätzlicher Zugabe von 1 bis 1,25 Mol% $BaO \cdot Nb_2O_5$, $BaO \cdot Ta_2O_5$, $PbO \cdot Nb_2O_5$ und/oder $PbO \cdot Ta_2O_5$ herabgesetzt wurde von 1300 bis 1350 °C (reines $BaTiO_3$) auf 1080 bis 1100 °C. Mit dieser bekannten Keramik sind Dielektrizitätskonstanten von $\varepsilon_{rel} = 1200$ bis 1800 erreichbar, wobei diese Dielektrika auch eine relativ gute Temperaturstabilität der Dielektrizitätskonstanten von $\pm 17\%$ über einen Temperaturbereich von $-50\,°C$ bis $+130\,°C$ aufweisen (vgl. NL-OS 7 113 471).

Im Rahmen steigender Anforderungen insbesondere im Hinblick auf eine fortschreitende Miniaturisierung von Bauelementen für z.B. Hybridschaltungen hat es sich als wünschenswert erwiesen, die Kenngrössen der bekannten Keramik nach Möglichkeit zu verbessern, z.B. höhere relative Dielektrizitätskonstanten zu erreichen, ohne aber die Sintertemperatur wesentlich zu erhöhen und ohne die erreichten guten Kenngrössen, was die Abhängigkeit von Temperatur und Feldstärke betrifft, instabiler zu machen.

Aus GB-PS 1 327 903 ist ein Dielektrikum bekannt, das neben $BaTiO_3$ und $PbBi_4Ti_4O_{15}$ mindestens eine zusätzliche Verbindung aus der Gruppe $BaO.Nb_2O_5$, $BaO.Ta_2O_5$, $PbO.Nb_2O_5$, $PbO.Ta_2O_5$ enthält. Die zusätzliche(n) Verbindung(en) ist (sind) erforderlich, um eine gegenüber Zusammensetzungen aus 93,7 Mol% $BaTiO_3$ und 6,3 Mol% $PbBi_4Ti_4O_{15}$ respektive 97,3 Mol% $BaTiO_3$ und 2,7 Mol% $PbBi_4Ti_4O_{15}$ verbesserte Stabilität der Werte für die Dielektrizitätskonstante bei Temperaturänderungen zu erreichen. Für diese bekannten Dielektrika ist nicht offenbart, dass sie einphasig hergestellt sein müssen und die bekannten Dielektrika haben alle den Nachteil, dass sie relativ niedrige Werte für die Dielektrizitätskonstante und relativ hohe Werte für den Verlustfaktor aufweisen.

Der Erfindung liegt die Aufgabe zugrunde, das eingangs genannte keramische Dielektrikum auf Basis von Wismut enthaltendem $BaTiO_3$ derart zu verbessern, dass höhere Werte für die relative Dielektrizitätskontante bei gleichzeitig verbesserten Werten für die Temperaturstabilität der Dielektrizitätskonstanten erreicht werden, dass die Sintertemperatur jedoch in der Grössenordnung wie die der bekannten Keramik bleibt und dass darüber hinaus eine besonders hohe Spannungsstabilität bei angelegten Gleichspannungsfeldern erreicht wird.

Diese Aufgabe wird erfindungsgemäss dadurch gelöst, dass das Dielektrikum eine einphasige Keramik in Form eines Mischkristalls ist, bestehend aus 0,02 bis 0,12 Mol der Schichtperowskite $PbBi_4Ti_4O_{15}$ oder $SrBi_4Ti_4O_{15}$ pro Mol $BaTiO_3$.

Nach einer vorteilhaften Weiterbildung der Erfindung besteht der Mischkristall aus 0,03 bis 0,06 Mol $PbBi_4Ti_4O_{15}$ oder $SrBi_4Ti_4O_{15}$ pro Mol $BaTiO_3$.

Nach einer besonders vorteilhaften Weiterbildung der Erfindung besteht der Mischkristall aus 0,03 Mol $SrBi_4Ti_4O_{15}$ pro Mol $BaTiO_3$.

Diese einphasige Keramik zeigt einen besonderen Vorteil für die Praxis: das Dauerstandsverhalten ist gegenüber einem Mischkristall, der $PbBi_4Ti_4O_{15}$ enthält, nicht unwesentlich verbessert. Dies trifft auch auf Mischkristalle zu, die einen höheren Anteil als 0,03 Mol $SrBi_4Ti_4O_{15}$ pro Mol $BaTiO_3$ enthalten.

Der Vorteil eines $PbBi_4Ti_4O_{15}$-Zusatzes liegt dagegen in niedrigeren Sintertemperaturen gegenüber den für Mischkristalle mit $SrBi_4Ti_4O_{15}$-Zusatz erforderlichen Sintertemperaturen.

Die genannten Schichtperowskite $PbBi_4Ti_4O_{15}$ und $SrBi_4Ti_4O_{15}$ bilden mit $BaTiO_3$ Mischkristalle, die mit einer Sintertemperatur von 1100 bis 1150 °C eine erheblich niedrigere Sintertemperatur als reines $BaTiO_3$ (1300 bis 1350 °C) haben, obwohl die zugesetzten Mengen der Schichtperowskite mit 0,03 bis 0,12 und vorzugsweise 0,03 bis 0,04 Mol/Mol $BaTiO_3$ relativ gering sind. Diese herabgesetzte Sintertemperatur hat den grossen Vorteil, dass bei der Verwendung der Keramik als Dielektrikum für Vielschichtkondensatoren, bei welchen das Elektrodenmetall ja bereits auf die grüne, also noch ungesinterte Keramik aufgebracht wird und die Sinterung der Keramik mitsamt den Elektroden erfolgt, keine reinen Edelmetalle, wie z.B. Palladium, verwendet zu werden brauchen, was bei Keramik mit höheren Sintertemperaturen wegen des Schmelzpunktes des Elektrodenmetalls erforderlich ist. Bei der vorliegenden Keramik können mit Vorteil Legierungen für die Elektroden verwendet werden, die Legierungsbestandteile mit niedrigeren Schmelzpunkten, wie z.B. Silber, haben. Die mit Vorteil für Keramik der vorliegenden Art verwendeten Elektrodenmetalle bestehen aus Silber-Palladium-Legierungen mit einem überwiegenden Silberanteil (60 bis 70 Gew.%).

Ein weiterer Vorteil des erfindungsgemässen keramischen Dielektrikums ist, dass relative Dielektrizitätskonstanten mit Werten von $\varepsilon_{rel} = 2800$ erreicht werden können; die bekannte Keramik auf Basis von $BaTiO_3$ mit Zusätzen von $PbBi_4Ti_4O_{15}$ + $BaO \cdot Nb_2O_5$, $BaO \cdot Ta_2O_5$, $PbO \cdot Nb_2O_5$ oder $PbO \cdot Ta_2O_5$ weisen demgegenüber nur Werte für die relative Dielektrizitätskonstante von $\varepsilon_{rel} \leqslant 2000$ auf. Die erhöhten Werte für die Dielektrizitätskonstante $\varepsilon_{rel}$ bei der erfindungsgemässen Keramik sind – was ebenfalls eine beträchtliche Verbesserung gegenüber dem bekannten Dielektrikum auf $BaTiO_3$-Basis bedeutet – in einem Temperaturbereich von $-30$ °C bis $+125$ °C ausserordentlich stabil, die Werte zeigen eine Abweichung von nur $\pm 10\%$ von den Werten für die relative Dielektrizitätskonstante $\varepsilon_{rel}$ bei Raumtemperatur (25 °C). Einige der Zusammensetzungen gemäss der Erfindung zeigen im Temperaturbereich von $-55$ °C bis $+125$ °C Abweichungen von weniger als $\pm 15\%$. Die bekannte Keramik liegt hier mit einer Abweichung von $\pm 17\%$ im Temperaturbereich von $-50$ °C bis $+130$ °C ungünstiger, was für die Praxis von Bedeutung ist.

Der für die Anwendung als Kondensator-Dielektrkum wichtigste Vorteil bei der beanspruchten Keramik ist jedoch die sehr geringe Änderung der Werte für die relative Dielektrizitätskonstante bei angelegten Gleichspannungsfeldern. So ändert sich die bei 1 kHz gemessene relative Dielektrizitätskonstante $\varepsilon_{rel}$ bei gleichzeitig angelegten Gleichspannungsfeldern von 10 kV/cm um weniger als 1,5%. Diese Eigenschaft hat sich überraschend über den gesamten beanspruchten Zusammensetzungsbereich gezeigt und macht den Einsatz dieser Materialien in Vielschichtenkondensatoren mit besonders dünnen dielektrischen Keramikschichten ausserordentlich interessant, wobei diese Vielschichtkondensatoren zudem noch bei relativ niedrigen Sintertemperaturen dichtgesintert werden und deshalb mit Elektroden hergestellt werden können, die überwiegend Metalle mit Schmelzpunkten unter 1000 °C enthalten.

Anhand der Zeichnung werden Ausführungsbeispiele der Erfindung beschrieben und ihre Wirkungsweise erläutert. Es zeigen:

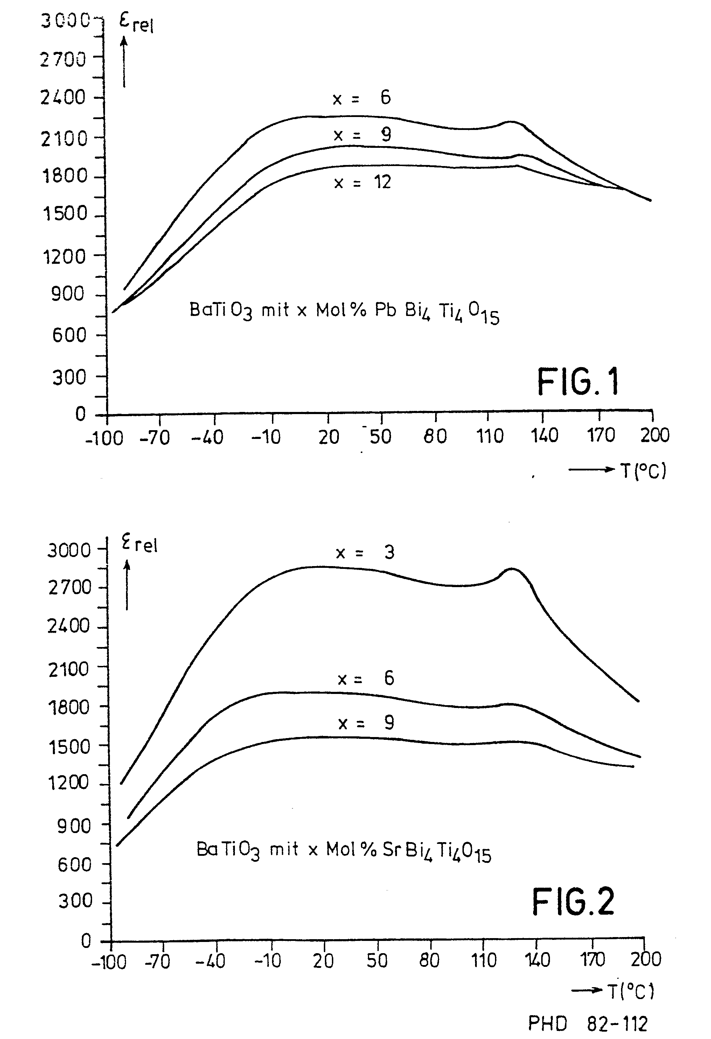

Fig. 1 und 2 Diagramme der Temperaturabhängigkeit der relativen Dielektrizitätskonstanten $\varepsilon_{rel}$ für Keramik gemäss der Erfindung.

In Fig. 1 sind die gemessenen Werte für die relative Dielektrizitätskonstante $\varepsilon_{rel}$ gegen die Temperatur T für Keramik der Zusammensetzungen $BaTiO_3$ mit 6, 9 und 12 Mol% $PbBi_4Ti_4O_{15}$, die bei einer Temperatur von 1110 °C 4 h an Luft gesintert wurde, aufgetragen. Es zeigt sich eine relativ gute Temperaturbeständigkeit der relativen Dielektrizitätskonstanten im Temperaturbereich von $-30$ °C bis $+125$ °C.

In Fig. 2 sind die gemessenen Werte für die relative Dielektrizitätskonstante $\varepsilon_{rel}$ gegen die Temperatur T für Keramik der Zusammensetzungen $BaTiO_3$ mit 3 Mol% $SrBi_4Ti_4O_{15}$, die 4 h bei 1150 °C an Luft gesintert wurde und $BaTiO_3$ mit 6 und 12 Mol% $SrBi_4Ti_4O_{15}$, die 4 h an Luft bei 1110 °C gesintert wurde, aufgetragen. Hier zeigt sich ebenfalls eine relativ gute Konstanz der Werte für $\varepsilon_{rel}$ im Temperaturbereich von $-30$ °C bis $+125$ °C.

Die für die herzustellende Mischkristall-Keramik erforderlichen Ausgangssubstanzen ($BaCO_3$, $TiO_2$, $SrCO_3$, $Bi_2O_3$) werden als übliche analysenreine Rohstoffe in Achatkugelmühlen nass aufgemahlen und in einem Temperaturbereich von 1050 bis 1100 °C über eine Dauer von 12 bis 15 h in Normalatmosphäre vorgesintert. Das Sintergut wird in den entsprechenden Mischungsverhältnissen, die nominell dem gewünschten herzustellenden Mischkristall entsprechen, noch einmal feinst vermahlen und dann auf bekannte Weise zu einer Masse aufbereitet, aus der Folien für Vielschichtkondensatoren hergestellt werden können.

Zur Herstellung neuer Vielschichtkondensatoren mit einem Dielektrikum mit der Zusammensetzung $BaTiO_3 \cdot 0,03 \, SrBi_4Ti_4O_{15}$ wurde wie folgt verfahren:

Als Einwaage für den keramischen Versatz wurden Gemische der folgenden Zusammensetzung hergestellt: 98,68 g $BaCO_3$ + 39,95 g $TiO_2$; 2,215 g $SrCO_3$ + 13,98 g $Bi_2O_3$ + 4,794 g $TiO_2$.

Die vorgesinterte und feinst vermahlene Zusammensetzung wurde in 30 Gew.% deionisiertem Wasser mit Hilfe eines Befeuchtungsmittels aufgeschlämmt. Die Aufschlämmung wurde mit einem organischen Bindemittel, z.B. polymerisierte Kohlenwasserstoffe, und einem Weichmacher gemeinsam in einer Dispersionsmühle vermischt. Als Weichmacher kann z.B. Triäthylenglycol verwendet werden. Die so erhaltene Suspension wurde unter vermindertem Druck entgast und mit einem Benetzungsmittel verrührt. Mit Hilfe eines umlaufenden Stahlbandes wurde eine dünne Schicht der Suspension aus einem Überlaufbehälter gezogen und zu ca. 40 µm dicken keramischen Folien getrocknet. Es wurden so viele ungebrannte Folienstücke übereinandergestapelt, wie es für die gewünschte Dicke des Kondensators erforderlich war. Zwischen diesen Folienstücken wurden ca. 8 µm dicke Elektroden-Schichten aufgetragen, die aus Ag/Pd-Pulver (60 Gew.% Ag, 40 Gew.% Pd) und einem organischen Bindemittel, z.B. Zelluloseacetat, bestanden. Anschliessend wurde der Stapel gepresst und zu monolithischen mehrschichtigen Blöcken ausgestanzt. Die Blöcke wurden mit einer Geschwindigkeit von 0,5°C/min an Luft auf 600°C erhitzt, um die Lösungsmittel zu verdampfen und die Bindemittel auszubrennen. Danach wurden die Blöcke an Luft mit einer Geschwindigkeit von 3°C/min auf 1150°C aufgeheizt und zum Sintern 8 bis 10 Stunden bei dieser Temperatur gehalten.

Nach dem Sintern wurden die Blöcke mit einer Geschwindigkeit von 3°C/min auf Zimmertemperatur abgekühlt. Die gesinterten monolithischen Blöcke wurden mit gut haftenden und lötbaren elektrischen Endkontakten versehen.

An fertig kontaktierten Kondensatoren wurde das Dauerstandsverhalten untersucht; hierzu wurden aus der keramischen Masse Scheibchen eines Durchmessers von 5 mm und einer Dicke von 0,5 mm gepresst und bei gleichen Temperaturen wie vorstehend beschrieben gesintert und anschliessend mit Cr/Ni/Au-Elektroden versehen.

Die Dauerstandsmessungen wurden bei einer Spannung von 1000 V unter einer Temperatur von 125°C über eine Dauer von 1000 h durchgeführt. Es zeigte sich dabei, dass Proben mit max. 0,12 Mol $SrBi_4Ti_4O_{15}$ pro Mol $BaTiO_3$ und mit max. 0,09 Mol $PbBi_4Ti_4O_{15}$ pro Mol $BaTiO_3$ ab etwa 500 h Testdauer Werte für den spezifischen Widerstand zeigten, die um drei Zehnerpotenzen niedriger als der spezifische Widerstand zu Beginn des Testes waren. Die übrigen Proben der in Tabelle 1 dargestellten Zusammensetzungen zeigten nur geringfügige, zum Teil gar nicht messbare Änderungen in den Werten für den spezifischen Widerstand.

Die Dichte der gesinterten Keramik lag bei etwa 98% der theoretisch erreichbaren Dichte.

In der nachfolgenden Tabelle 1 sind die dielektrischen Kenngrössen von auf die oben beschriebene Weise hergestellten Kondensatoren mit Dielektrika aus der beanspruchten Keramik zusammengefasst:

Tabelle 1
Dielektrische Kenngrössen von Mischkristallen aus $BaTiO_3$ mit x Mol % Schichtperowskitzusatz

| Probe Nr. | Schicht-perowskit | x (Mol %) | Sintertemp. (°C) | Dichte (g/cm³) | Diel.-konstante $\varepsilon_{rel}$ (25°C) | Diel.-Verlustfaktor tan δ (25°C) | Abweichung $\Delta\varepsilon_{rel}$ von $\varepsilon_{rel}$ bei 25°C (%) −55°C | −30°C | 85°C | 125°C | IEA Spezifikation |
|---|---|---|---|---|---|---|---|---|---|---|---|
| 435 | $PbBi_4Ti_4O_{15}$ | 6 | 1110 | 6,27 | 2250 | 1,8% | −34 | −13 | −4,5 | −11,2 | Y7R |
| 436 | $PbBi_4Ti_4O_{15}$ | 9 | 1110 | 6,37 | 2010 | 1,8% | −37 | −18 | −3 | −1,5 | |
| 437 | $PbBi_4Ti_4O_{15}$ | 12 | 1110 | 6,45 | 1860 | 2 % | −35,5 | −13 | −1,7 | −1,7 | Y7R |
| 438 | $SrBi_4Ti_4O_{15}$ | 3 | 1150 | 6,01 | 2850 | 1 % | −22 | −4,3 | −7,5 | −6,4 | Y7R |
| 781a | $SrBi_4Ti_4O_{15}$ | 4 | 1100 | 6,05 | 2230 | 0,7% | −13,5 | −3,4 | −9,5 | −12,8 | X7R |
| 439 | $SrBi_4Ti_4O_{15}$ | 6 | 1110 | 6,13 | 1900 | 0,8% | −11,5 | −4,7 | −5,3 | −4,7 | X7R, Y7F |
| 440 | $SrBi_4Ti_4O_{15}$ | 9 | 1110 | 6,21 | 1560 | 0,8 | −14,5 | −2 | −4 | −4 | X7R, Y7E |
| 441 | $SrBi_4Ti_4O_{15}$ | 12 | 1110 | 6,35 | 1290 | 0,9% | −14 | −2,4 | −2,4 | −2,4 | X7R, Y7D |

In Tabelle 2 sind die Änderungen der dielektrischen Kenngrössen $\varepsilon_{rel}$ und tan $\delta$ (%) mit angelegten Gleichspannungen E von 1 bis 10 kV/cm für Kondensatoren mit Dielektrika aus der beanspruchten Keramik (Proben Nr. 435 bis 441) dargestellt.

Tabelle 2

| Probe Nr. | E (kV/cm) | $\Delta\varepsilon_{rel}$ von $\varepsilon_{rel}$ bei 25 °C (%) | tan $\delta$ (%) |
|---|---|---|---|
| 435 | 1 | +0,19 | 1,47 |
| | 2 | +0,25 | 1,47 |
| | 3 | +0,19 | 1,47 |
| | 4 | +0,19 | 1,46 |
| | 6 | +0,06 | 1,48 |
| | 8 | −0,31 | 1,45 |
| | 10 | −0,75 | 1,44 |
| 437 | 1 | +0,16 | 2,61 |
| | 2 | +0,25 | 2,63 |
| | 3 | +0,33 | 2,65 |
| | 4 | +0,33 | 2,65 |
| | 6 | +0,25 | 2,68 |
| | 8 | ±0 | 2,67 |
| | 10 | −0,49 | 2,67 |
| 438 | 1 | +0,16 | 0,95 |
| | 2 | +0,16 | 0,95 |
| | 3 | +0,22 | 0,95 |
| | 4 | +0,11 | 0,94 |
| | 6 | −0,05 | 0,94 |
| | 8 | −0,32 | 0,95 |
| | 10 | −0,81 | 0,95 |
| 439 | 1 | +0,15 | 0,93 |
| | 2 | +0,15 | 0,93 |
| | 3 | +0,23 | 0,95 |
| | 4 | +0,15 | 0,95 |
| | 6 | +0,08 | 0,95 |
| | 8 | −0,23 | 0,94 |
| | 10 | −0,76 | 0,94 |
| 440 | 1 | +0,09 | 0,85 |
| | 2 | +0,18 | 0,86 |
| | 3 | +0,18 | 0,86 |
| | 4 | +0,09 | 0,87 |
| | 6 | +0,09 | 0,88 |
| | 8 | −0,18 | 0,87 |
| | 10 | −0,63 | 0,88 |
| 441 | 1 | +0,11 | 0,91 |
| | 2 | +0,22 | 0,93 |
| | 3 | +0,22 | 0,92 |
| | 4 | +0,22 | 0,94 |
| | 6 | +0,11 | 0,95 |
| | 8 | ±0 | 0,96 |
| | 10 | −0,33 | 0,95 |

**Patentansprüche**

1. Keramisches Dielektrikum auf Basis von Wismut enthaltendem $BaTiO_3$, dadurch gekennzeichnet, dass das Dielektrikum eine einphasige Keramik in Form eines Mischkristalls, bestehend aus 0,02 bis 0,12 Mol der Schichtperowskite $PbBi_4Ti_4O_{15}$ oder $SrBi_4Ti_4O_{15}$ pro Mol $BaTiO_3$, ist.

2. Keramisches Dielektrikum nach Anspruch 1, dadurch gekennzeichnet, dass der Mischkristall aus 0,03 bis 0,06 Mol $PbBi_4Ti_4O_{15}$ oder $SrBi_4Ti_4O_{15}$ pro Mol $BaTiO_3$ besteht.

3. Keramisches Dielektrikum nach Anspruch 1, dadurch gekennzeichnet, dass der Mischkristall aus 0,03 bis 0,04 Mol $PbBi_4Ti_4O_{15}$ oder $SrBi_4Ti_4O_{15}$ pro Mol $BaTiO_3$ besteht.

4. Keramisches Dielektrikum nach Anspruch 1, dadurch gekennzeichnet, dass der Mischkristall aus 0,03 Mol $SrBi_4Ti_4O_{15}$ pro Mol $BaTiO_3$ besteht.

**Claims**

1. A ceramic dielectric on the basis of bismuth-containing $BaTiO_3$, characterized in that the dielectric is a monophase ceramic in the form of a mixed crystal which comprises from 0.02 to 0.12 mol of the layer perowskite $PbBi_4Ti_4O_{15}$ or $SrBi_4Ti_4O_{15}$ per mol of $BaTiO_3$.

2. A ceramic dielectric as claimed in Claim 1, characterized in that the mixed crystal comprises from 0.03 to 0.06 mol $PbBi_4Ti_4O_{15}$ or $SrBi_4Ti_4O_{15}$ per mol of $BaTiO_3$.

3. A ceramic dielectric as claimed in Claim 1, characterized in that the mixed crystal comprises from 0.03 to 0.04 mol $PbBi_4Ti_4O_{15}$ or $SrBi_4Ti_4O_{15}$ per mol of $BaTiO_3$.

4. A ceramic dielectric as claimed in Claim 1, characterized in that the mixed crystal comprises 0.03 mol $SrBi_4T_4O_{15}$ per mol of $BaTiO_3$.

**Revendications**

1. Diélectrique céramique à base de $BaTiO_3$ contenant du bismuth, caractérisé en ce que le diélectrique est une substance céramique monophasé sous forme d'un cristal mixte, constitué par 0,02 à 0,12 mol de la pérowskite stratifiée $PbBi_4Ti_4O_{15}$ ou de $SrBi_4Ti_4O_{15}$ par mole de $BaTiO_3$.

2. Diélectrique céramique selon la revendication 1, caractérisé en ce que le cristal mixte est constitué par 0,03 à 0,06 mole de $PbBi_4Ti_4O_{15}$ ou de $SrBi_4Ti_4O_{15}$ par mole de $BaTiO_3$.

3. Diélectrique céramique selon la revendication 1, caractérisé en ce que le cristal mixte est constitué par 0,03 à 0,04 mole de $PbBi_4Ti_4O_{15}$ ou de $SrBi_4Ti_4O_{15}$ par mole de $BaTiO_3$.

4. Diélectric céramique selon la revendication 1, caractérisé en ce que le cristal mixte est constitué par 0,03 mole de $SrBi_4Ti_4O_{15}$ par mole de $BaTiO_3$.

FIG.1

$\varepsilon_{rel}$

x = 6
x = 9
x = 12

$BaTiO_3$ mit x Mol% $Pb\,Bi_4\,Ti_4\,O_{15}$

T(°C)

FIG.2

$\varepsilon_{rel}$

x = 3
x = 6
x = 9

$BaTiO_3$ mit x Mol% $Sr\,Bi_4\,Ti_4\,O_{15}$

T(°C)

PHD 82-112

7